# EUROPÄISCHE PATENTSCHRIFT

(11) **EP 2 069 409 B1**
(45) Veröffentlichungstag und Bekanntmachung des Hinweises auf die Patenterteilung: **30.05.2012**
(21) Anmeldenummer: 07820484.9
(22) Anmeldetag: 24.09.2007
(51) Int. Cl.: C08F 6/00, B01J 8/10, C08J 3/075, F26B 3/00, F26B 17/04, F26B 21/00, C08L 33/02, G05B 13/00, C08J 3/12, C08L 101/14, C08J 3/24, F26B 21/10, F26B 21/12, F26B 25/22

(54) **VERFAHREN ZUR KONTINUIERLICHEN HERSTELLUNG WASSERABSORBIERENDER POLYMERPARTIKEL**
METHOD FOR THE CONTINUOUS PRODUCTION OF WATER ABSORBENT POLYMER PARTICLES
PROCÉDÉ POUR LA PRÉPARATION EN CONTINU DE PARTICULES POLYMÈRES ABSORBANT L'EAU

(30) Priorität: 25.09.2006 EP 06121227
(43) Veröffentlichungstag der Anmeldung: 17.06.2009
(73) Patentinhaber: BASF SE, 67056 Ludwigshafen (DE)
(72) Erfinder: STUEVEN Uwe, 65812 Bad Soden (DE); FUNK Rüdiger, 65527 Niedernhausen (DE); WEISMANTEL Matthias, 63637 Jossgrund (DE); POSSEMIERS Karl J., 2970 Schilde (BE); DEBOEL Koen, 2610 Wilrijk (BE)
(86) Internationale Anmeldenummer: PCT/EP2007/060077
(87) Internationale Veröffentlichungsnummer: WO 2008/037676

(56) Entgegenhaltungen:
- WO-A-2005/122075

## Beschreibung

Die vorliegende Erfindung betrifft ein Verfahren zur kontinuierlichen Herstellung wasserabsorbierender Polymerpartikel, umfassend die Trocknung eines Polymergels auf einem Umluftbandtrockner, wobei der Wassergehalt des Polymergels während oder nach der Trocknung zur Regelung des Umluftbandtrockners verwendet wird.

Die Herstellung wasserabsorbierender Polymerpartikel wird in der Monographie "Modern Superabsorbent Polymer Technology", F.L. Buchholz und A.T. Graham, Wiley-VCH, 1998, Seiten 71 bis 103, beschrieben.

Wasserabsorbierende Polymere werden als wässrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet.

Die Eigenschaften der wasserabsorbierenden Polymere können über den Vernetzungsgrad eingestellt werden. Mit steigendem Vernetzungsgrad steigt die Gelfestigkeit und sinkt die Zentrifugenretentionskapazität (CRC).

Zur Verbesserung der Anwendungseigenschaften, wie beispielsweise Flüssigkeitsweiterleitung im gequollenen Gelbett (SFC) in der Windel und Absorption unter Druck (AUL), werden wasserabsorbierende Polymerpartikel im allgemeinen nachvernetzt. Dadurch steigt nur der Vernetzungsgrad der Partikeloberfläche, wodurch die Absorption unter Druck (AUL) und die Zentrifugenretentionskapazität (CRC) zumindest teilweise entkoppelt werden können. Diese Nachvernetzung kann in wässriger Gelphase durchgeführt werden. Vorzugsweise werden aber getrocknete, gemahlene und abgesiebte Polymerpartikel (Grundpolymer) an der Oberfläche mit einem Nachvernetzer beschichtet, thermisch nachvernetzt und getrocknet. Dazu geeignete Vernetzer sind Verbindungen, die mindestens zwei Gruppen enthalten, die mit den Carboxylatgruppen des hydrophilen Polymeren kovalente Bindungen bilden können.

Üblicherweise wird nach der Polymerisation ein wässriges Polymergel erhalten, das getrocknet werden muss. Die Trocknung des Polymergels wird ebenfalls in der Monographie "Modern Superabsorbent Polymer Technology", F.L. Buchholz und A.T. Graham, Wiley-VCH, 1998, Seiten 87 bis 93, offenbart. Zur Trocknung des Polymergels werden vorzugsweise Umluftbandtrockner verwendet. Der Wassergehalt des getrockneten Polmergels beträgt ca. 1 bis 5 Gew.-%.

EP 289 338 A1 beschreibt ein Verfahren zur Herstellung wasserabsorbierender Polymerpartikel mit niedrigem Restmonomerengehalt. Bei der Trocknung des Polymergels wird Luft mit einem hohen Wasserdampfgehalt verwendet. Der Wasserdampfgehalt der anströmenden Trocknungsluft wird dabei über eine teilweise Rückführung des Abgases auf den gewünschten Wert geregelt.

Die ältere PCT-Anmeldung mit dem Aktenzeichen PCT/EP2006/061010 offenbart optimale Verfahrensbedingungen für die Trocknung des Polymergels auf einem Umluftbandtrockner.

WO 2005/122075 A1 beschreibt ein kontinuierliches Verfahren zur Herstellung wasserabsorbierender Polymerpartikel, wobei das Verfahren über ein künstliches neuronales Netzwerk gesteuert wird. Das neuronale Netzwerk kann beispielsweise dazu genutzt werden, um die Auswirkungen von geplanten Änderungen auf die Produktqualität zu berechnen. Es ist aber auch möglich das neuronale Netzwerk zur Prozeßsteuerung zu verwenden. Gemäß dem offenbarten Verfahren kann neben anderen Meßgrößen auch der Restwassergehalt nach der Trocknung bestimmt werden, wobei die anschließende Mahlung des getrockneten Polymergels an den jeweilligen Wassergehalt angepasst wird (Seite 19, Zeilen 3 bis 8).

Aufgabe der vorliegenden Erfindung war die Bereitstellung eines verbesserten Verfahrens zur kontinuierlichen Herstellung wasserabsorbierender Polymerpartikel. Insbesondere soll sich das Verfahren durch eine hohe Prozeßstabilität auszeichnen.

Gelöst wurde die Aufgabe durch ein Verfahren zur kontinuierlichen Herstellung wasserabsorbierender Polymerpartikel, umfassend,
i) Polymerisation einer Monomerlösung, wobei ein Polymergel erhalten wird,
ii) Trocknung des Polymergels auf einem Umluftbandtrockner, wobei der Umluftbandtrockner mindestens eine Trockenkammer aufweist,
iii) Zerkleinerung des getrockneten Polymergels, wobei Polymerpartikel erhalten werden,
iv) Klassierung der Polymerpartikel und
v) Nachvernetzung der klassierten Polymerpartikel,
dadurch gekennzeichnet, dass der Wassergehalt des Polymergels während oder nach der Trocknung des Polymergels ii) und vor der Nachvernetzung v) kontinuierlich bestimmt und als Regelgröße für den Umluftbandtrockner verwendet wird und dass die aus der Regelung abgeleitete Stellgröße bei abweichendem Sollwert kontinuierlich angepasst wird.

Kontinuierlich bestimmt bedeutet hierbei, dass der Wassergehalt mindestens einmal in einer Minute, besonders bevorzugt mindestens einmal in 30 Sekunden, ganz besonders bevorzugt mindestens einmal in 10 Sekunden bestimmt wird.
Kontinuierlich angepasst bedeutet hierbei, dass die Stellgröße mindestens einmal in einer Minute, besonders bevorzugt mindestens einmal in 30 Sekunden, ganz besonders bevorzugt mindestens einmal in 10 Sekunden angepasst wird.

Der Umluftbandtrockner hat vorzugsweise von 1 bis 30, besonders bevorzugt von 3 bis 20, ganz besonders bevorzugt von 5 bis 15, Trockenkammern. Eine Trockenkammer ist ein Bereich, in dem die Temperatur und die Menge der anströmenden Luft unabhängig voneinander eingestellt werden können.

Das Polymergel hat auf den verwendeten Umluftbandtrocknem eine Verweilzeit im Bereich von 20 bis 40 Minuten. Daher reagiert ein Umluftbandtrockner nur sehr träge auf Änderungen der Prozeßparameter, wie Änderung der Lufttemperatur, Luftgeschwindigkeit (Luftmenge) und Förderbandgeschwindigkeit.

Insbesondere wird durch eine Änderung der Förderbandgeschwindigkeit gleichzeitig die Flächenbelegung des Förderbandes bzw. die Kapazität der gesammten Produktion geändert. Beides führt zu unerwünschten Rückkopplungen im gesamten System.

Daher wurden Lufttemperatur, Luftgeschwindigkeit (Luftmenge) und Förderbandgeschwindigkeit zwar auf die Eigenschaften des zu trocknenden Polymergels angepasst, aber während einer Produktion nicht mehr verändert. Geringe Änderungen im Wassergehalt führten auch nicht zu Änderungen der Qualität des getrockneten Polymergels.

Bekannt war allerdings, dass der Wassergehalt einen Einfluß auf die mechanische Stabilität und damit die anschließende Zerkleinerung hat. Damit erschien es aber ausreichend die nachfolgende Zerkleinerung kontinuierlich an Änderungen im Wassergehalt anzupassen.

Der vorliegenden Erfindung liegt die Erkenntnis zugrunde, dass der Wassergehalt des getrockneten Polymergels nach der Trocknung ii) und vor der Nachvernetzung v) einen entscheidenden Einfluß auf die Eigenschaften, speziell der Absorption unter Druck, der nachvernetzten wasserabsorbierenden Polymerpartikel hat. Bereits geringe Abweichungen nach oben oder unten führen zu deutlich schlechteren Produkten.

Deshalb ist die kontinuierliche Regelung des Wassergehalts während oder nach der Trocknung ii) und vor der Nachvernetzung v) zwingend für eine hohe und gleichbleibende Produktqualität. Es ist aber auch möglich den Wassergehalt des Polymergels während der Trocknung zu regeln, beispielsweise in der letzten Trockenkammer oder in einem Bereich der Trocknung, wo der mittlere Wassergehalt bereits weniger als 10 Gew.-% beträgt, wobei der Wassergehalt gemäß der von der EDANA (European Disposables and Nonwovens Association) empfohlenen Testmethode Nr. 430.2-02 "Moisture content" bestimmt wird.

Die wasserabsorbierenden Polymerpartikel weisen eine Zentrifugenretentionskapazität (CRC) von typischerweise mindestens 15 g/g, vorzugsweise mindestens 20 g/g, bevorzugt mindestens 25 g/g, besonders bevorzugt mindestens 30 g/g, ganz besonders bevorzugt mindestens 35 g/g, auf. Die Zentrifugenretentionskapazität (CRC) der wasserabsorbierenden Polymerpartikel beträgt üblicherweise weniger als 60 g/g, wobei die Zentrifugenretentionskapazität (CRC) gemäß der von der EDANA (European Disposables and Nonwovens Association) empfohlenen Testmethode Nr. 441.2-02 "Centrifuge retention capacity" bestimmt wird.

Die Trocknung des Polymergels ii) wird vorzugsweise so geregelt, dass der Wassergehalt des Polymergels an der Messstelle über einen Zeitraum von mindestens einer Stunde um weniger als 1,5 Gew.-% vom Mittelwert abweicht und der Mittelwert für den Wassergehalt an der Messstelle weniger als 10 Gew.-% beträgt, wobei der Wassergehalt gemäß der von der EDANA (European Disposables and Nonwovens Association) empfohlenen Testmethode Nr. 430.2-02 "Moisture content" bestimmt wird.

Der Wassergehalt wird vorzugsweise vor der Klassierung iv), besonders bevorzugt vor der Zerkleinerung iii), ganz besonders bevorzugt auf dem Umluftbandtrockner, bestimmt.

Der Wassergehalt des getrockneten Polymergels beträgt nach der Trocknung ii) und vor der Nachvernetzung v) vorzugsweise von 1 bis 10 Gew.-%, besonders bevorzugt von 2 bis 8 Gew.-%, ganz besonders bevorzugt von 3 bis 6 Gew.-%.

Es ist möglich die Förderbandgeschwindigkeit des Umluftbandtrockners als Stellgröße zu verwenden. Die Förderbandgeschwindigkeit beträgt vorzugsweise von 0,005 bis 0,05 m/s, besonders bevorzugt von 0,01 bis 0,03 m/s, besonders bevorzugt von 0,015 bis 0,025 m/s.

Vorteilhaft wird das zu trocknende Polymergel aus einem Pufferbehälter auf das Förderband dosiert. Dadurch kann die Förderbandbelegung bei Änderung der Förderbandgeschwindigkeit durch entsprechende Änderung der Dosiermenge aufgefangen werden. Unerwünschte Rückkopplungen auf den Gesamtprozeß werden vermieden.

Es ist auch möglich die Geschwindigkeit der anströmenden Luft als Stellgröße zu verwenden. Die Geschwindigkeit der anströmenden Luft beträgt vorzugsweise von 0,5 bis 5 m/s, besonders bevorzugt von 0,8 bis 3 m/s, besonders bevorzugt von 1 bis 2 m/s.

Es ist auch möglich die Gaseingangstemperatur des Umluftbandtrockners als Stellgröße zu verwenden. Die Gaseingangstemperatur des Umluftbandtrockners beträgt vorzugsweise von 50 bis 250 °C, besonders bevorzugt von 100 bis 200 °C, besonders bevorzugt von 150 bis 180 °C.

In einer bevorzugten Ausführungsform der vorliegenden Erfindung wird eine Kaskadenregelung eingesetzt, d. h. der Stellwert eines Reglers ist die Regelgröße eines weiteren Reglers.

Es wurde festgestellt, dass Änderungen der Gaseingangstemperatur des Umluftbandtrockners, der Geschwindigkeit der anströmenden Luft und der Förderbandgeschwindigkeit mit unterschiedlicher Verzögerung zu einer Änderung im Wassergehalt während oder nach der Trocknung führen. Die Zeitverzögerung ist bei Verwendung der Gaseingangstemperatur des Umluftbandtrockners als Stellgröße am größten und bei Verwendung der Förderbandgeschwindigkeit als Stellgröße am kleinsten.

Vorteilhaft wird daher der Wassergehalt des getrockneten Polymergels mittels einer Stellgröße mit kleiner Zeitverzögerung geregelt. Diese Stellgröße kann dann als Regelgröße in einem zweiten Regler verwendet werden, der eine Stellgröße mit größerer Zeitverzögerung hat.

Beispielsweise kann der Wassergehalt nach der Trocknung mittels der Förderbandgeschwindigkeit geregelt werden (erste Regelung). Gleichzeitig wird für die Förderbandgeschwindigkeit ein Sollwert festgelegt. Führt die erste Regelung zu einer Sollwertabweichung bei der Förderbandgeschwindigkeit, so wird die Geschwindigkeit der anströmenden Luft in mindestens einer Trockenkammer nachgeregelt (zweite Regelung). Die zweite Regelung ist hierbei träger eingestellt als die erste Regelung. Die zweite Regelung bewirkt nun, dass die Förderbandgeschwindigkeit wieder auf den Sollwert zurückschwingt.

Für die Geschwindigkeit der anströmenden Luft kann ebenfalls ein Sollwert festgelegt werden. Führt die zweite Regelung zu einer Sollwertabweichung bei der Geschwindigkeit der anströmenden Luft, so wird die Gaseingangstemperatur in der betreffenden Trockenkammer nachgeregelt (dritte Regelung). Die dritte Regelung ist hierbei träger eingestellt als die zweite Regelung. Die dritte Regelung bewirkt nun, dass die Geschwindigkeit der anströmenden Luft wieder auf den Sollwert zurückschwingt. Vorteilhaft werden die Stellgrößen nach oben und unten begrenzt. Damit werden unzulässig hohe Luftgeschwindigkeiten und Lufttemperaturen in den entsprechenden Trockenkammern vermieden.

Der Wassergehalt des Polymergels während oder nach der Trocknung ii) und vor der Nachvernetzung v) kann direkt oder indirekt bestimmt werden.

Eine direkte Messung ist beispielsweise eine Messung des Wassergehalts über die Dielektrizitätskonstante. Ein geeignetes Meßgerät ist beispielsweise die Feuchtemesssonde Typ MMS 2 (ACO Automation Components; Wutöschingen-Horheim; DE).

Eine derartige Meßsonde kann beispielweise in einem Pufferbehälter direkt nach dem Umluftbandtrockner eingebaut werden. Es ist aber auch möglich die Meßsonde auf einem Schlitten zu montieren und den Schlitten auf das getrocknete Polymergel im hinteren Bereich des Umluftbandtrockners aufzusetzen.

Eine indirekte Messung ist beispielsweise die Bestimmung der Wasserdampfaufnahme der Trocknungsluft in der letzten Trockenkammer. Die Wasserdampfaufnahme korreliert in diesem Bereich direkt mit dem Wassergehalt des Polymergels.

Die gemäß dem erfindungsgemäßen Verfahren einsetzbaren Monomerlösungen enthalten beispielsweise mindestens ein ethylenisch ungesättigtes Monomer a), wahlweise mindestens einen Vernetzer b), mindestens einen Initiator c) und Wasser d).

Die Monomeren a) sind vorzugsweise wasserlöslich, d.h. die Löslichkeit in Wasser bei 23 °C beträgt typischerweise mindestens 1g/100g Wasser, vorzugsweise mindestens 5 g/100 g Wasser, besonders bevorzugt mindestens 25g/100g Wasser, ganz besonders bevorzugt mindestens 50 g/100 g Wasser, und haben vorzugsweise mindestens je eine Säuregruppe.

Geeignete Monomere a) sind beispielsweise ethylenisch ungesättigte Carbonsäuren, wie Acrylsäure, Methacrylsäure, Maleinsäure, Fumarsäure und Itaconsäure. Besonders bevorzugte Monomere sind Acrylsäure und Methacrylsäure. Ganz besonders bevorzugt ist Acrylsäure.

Die bevorzugten Monomere a) haben mindestens eine Säuregruppe, wobei die Säuregruppen vorzugsweise zumindest teilweise neutralisiert sind.

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Monomere a), insbesondere Acrylsäure, enthalten vorzugsweise bis zu 0,025 Gew.-% eines Hydrochinonhalbethers. Bevorzugte Hydrochinonhalbether sind Hydrochinonmonomethylether (MEHQ) und/oder Tocopherole.

Unter Tocopherol werden Verbindungen der folgenden Formel verstanden 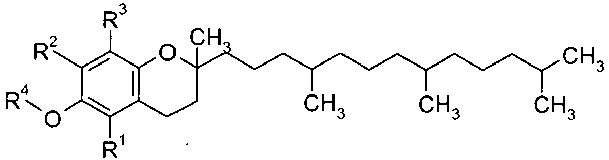 wobei R¹ Wasserstoff oder Methyl, R² Wasserstoff oder Methyl, R³ Wasserstoff oder Methyl und R⁴ Wasserstoff oder ein Säurerest mit 1 bis 20 Kohlenstoffatomen bedeutet.

Bevorzugte Reste für R⁴ sind Acetyl, Ascorbyl, Succinyl, Nicotinyl und andere physiologisch verträgliche Carbonsäuren. Die Carbonsäuren können Mono-, Di- oder Tricarbonsäuren sein.

Bevorzugt ist alpha-Tocopherol mit R¹ = R² = R³ = Methyl, insbesondere racemisches alpha-Tocopherol. R¹ ist besonders bevorzugt Wasserstoff oder Acetyl. Insbesondere bevorzugt ist RRR-alpha-Tocopherol.

Die Monomerlösung enthält bevorzugt höchstens 130 Gew.-ppm, besonders bevorzugt höchstens 70 Gew.-ppm, bevorzugt mindesten 10 Gew.-ppm, besonders bevorzugt mindesten 30 Gew.-ppm, insbesondere um 50 Gew.-ppm, Hydrochinonhalbether, jeweils bezogen auf Acrylsäure, wobei Acrylsäuresalze als Acrylsäure mit berücksichtigt werden. Beispielsweise kann zur Herstellung der Monomerlösung eine Acrylsäure mit einem entsprechenden Gehalt an Hydrochinonhalbether verwendet werden.

Vernetzer b) sind Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Allylmethacrylat, Trimethylolpropantriacrylat, Triallylamin, Tetraallyloxyethan, wie in EP 530 438 A1 beschrieben, Di- und Triacrylate, wie in EP 547 847 A1, EP 559 476 A1, EP 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/32962 A2 beschrieben.

Geeignete Vernetzer b) sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen, wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP 343 427 A2 beschrieben sind. Weiterhin geeignete Vernetzer b) sind Pentaerythritoldi-, Pentaerythritoltri- und Pentaerythritoltetraallylether, Polyethylenglykoldiallylether, Ethylenglykoldiallylether, Glyzerindi- und Glyzerintriallylether, Polyallylether auf Basis Sorbitol, sowie ethoxylierte Varianten davon. Im erfindungsgemäßen Verfahren einsetzbar sind Di(meth)acrylate von Polyethylenglykolen, wobei das eingesetzte Polyethylenglykol ein Molekulargewicht zwischen 100 und 1000 aufweist.

Besonders vorteilhafte Vernetzer b) sind jedoch Di- und Triacrylate des 3- bis 20-fach ethoxylierten Glyzerins, des 3- bis 20-fach ethoxylierten Trimethylolpropans, des 3- bis 20-fach ethoxylierten Trimethylolethans, insbesondere Di- und Triacrylate des 2- bis 6-fach ethoxylierten Glyzerins oder Trimethylolpropans, des 3-fach propoxylierten Glyzerins oder Trimethylolpropans, sowie des 3-fach gemischt ethoxylierten oder propoxylierten Glyzerins oder Trimethylolpropans, des 15-fach ethoxylierten Glyzerins oder Trimethylolpropans, sowie des mindestens 40-fach ethoxylierten Glyzerins, Trimethylolethans oder Trimethylolpropans.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3-bis 5-fach ethoxylierten und/oder propoxylierten Glyzerins.

Die Menge an Vernetzer b) beträgt vorzugsweise 0,01 bis 5 Gew.-%, besonders bevorzugt 0,05 bis 2 Gew.-%, ganz besonders bevorzugt 0,1 bis 1 Gew.-%, jeweils bezogen auf die Monomerlösung.

Als Initiatoren c) können sämtliche unter den Polymerisationsbedingungen radikalbildende Verbindungen eingesetzt werden, beispielsweise Peroxide, Hydroperoxide, Wasserstoffperoxid, Persulfate, Azoverbindungen und die sogenannten Redoxinitiatoren. Bevorzugt ist der Einsatz von wasserlöslichen Initiatoren. In manchen Fällen ist es vorteilhaft, Mischungen verschiedener Initiatoren zu verwenden, beispielsweise Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden.

Besonders bevorzugte Initiatoren c) sind Azoinitiatoren, wie 2,2'-Azobis[2-(2-imidazolin-2-yl)propan]dihydrochlorid und 2,2'-Azobis[2-(5-methyl-2-imidazolin-2-yl)propan]dihydrochlorid, und Photoinitiatoren, wie 2-Hydroxy-2-methylpropiophenon und 1-[4-(2-Hydroxyethoxy)-phenyl]-2-hydroxy-2-methyl-1-propan-1-on, Redoxinitiatoren, wie Natriumpersulfat/Hydroxymethylsulfinsäure, Ammoniumperoxodisulfat/Hydroxymethylsulfinsäure, Wasserstoffperoxid/Hydroxymethylsulfinsäure, Natriumpersulfat/Ascorbinsäure, Ammoniumperoxodisulfat/Ascorbinsäure und Wasserstoffperoxid/Ascorbinsäure, sowie deren Mischungen.

Die Initiatoren werden in üblichen Mengen eingesetzt, beispielsweise in Mengen von 0,001 bis 5 Gew.-%, vorzugsweise 0,01 bis 1 Gew.-%, bezogen auf die Monomeren a).

Die bevorzugten Polymerisationsinhibitoren benötigen für eine optimale Wirkung gelösten Sauerstoff. Daher kann die Monomerlösung vor der Polymerisation durch Inertisierung, d. h. Durchströmen mit einem inerten Gas, vorzugsweise Stickstoff, von gelöstem Sauerstoff befreit werden. Vorzugsweise wird der Sauerstoffgehalt der Monomerlösung vor der Polymerisation auf weniger als 1 Gew.-ppm, besonders bevorzugt auf weniger als 0,5 Gew.-ppm, gesenkt.

Die Herstellung eines geeigneten Polymers sowie weitere geeignete hydrophile ethylenisch ungesättigte Monomere a) werden in DE 199 41 423 A1, EP 686 650 A1, WO 2001/45758 A1 und WO 2003/104300 A1 beschrieben.

Geeignete Reaktoren sind Knetreaktoren oder Bandreaktoren. Im Kneter wird das bei der Polymerisation einer wässrigen Monomerlösung entstehende Polymergel durch beispielsweise gegenläufige Rührwellen kontinuierlich zerkleinert, wie in WO 20001/38402 A1 beschrieben. Die Polymerisation auf dem Band wird beispielsweise in DE 38 25 366 A1 und US 6,241,928 beschrieben. Bei der Polymerisation in einem Bandreaktor entsteht ein Polymergel, das in einem weiteren Verfahrensschritt zerkleinert werden muss, beispielsweise in einem Fleischwolf, Extruder oder Kneter.

Vorteilhaft wird das Hydrogel nach dem Verlassen des Polymerisationsreaktors noch bei höherer Temperatur, vorzugsweise mindestens 50 °C, besonders bevorzugt mindestes 70 °C, ganz besonders bevorzugt mindestens 80 °C, sowie vorzugsweise weniger als 100 °C. gelagert, beispielsweise in isolierten Behältern. Durch die Lagerung, üblicherweise 2 bis 12 Stunden, wird der Monomerumsatz weiter erhöht.

Bei höheren Monomerumsätzen im Polymerisationsreaktor kann die Lagerung auch deutlich verkürzt bzw. auf eine Lagerung verzichtet werden.

Die Säuregruppen der erhaltenen Polymergele sind üblicherweise teilweise neutralisiert, vorzugsweise zu 25 bis 95 mol-%, bevorzugt zu 50 bis 80 mol-%, besonders bevorzugt zu 60 bis 75 mol-%, wobei die üblichen Neutralisationsmittel verwendet werden können, vorzugsweise Alkalimetallhydroxide, Alkalimetalloxide, Alkalimetallcarbonate oder Alkalimetallhydrogencarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumcarbonat oder Natriumhydrogencarbonat sowie deren Mischungen.

Die Neutralisation wird vorzugsweise auf der Stufe der Monomeren durchgeführt. Dies geschieht üblicherweise durch Einmischung des Neutralisationsmittels als wässrige Lösung, als Schmelze, oder bevorzugt auch als Feststoff. Beispielsweise kann Natriumhydroxid mit einem Wasseranteil deutlich unter 50 Gew.-% als wachsartige Masse mit einem Schmelzpunkt oberhalb 23 °C vorliegen. In diesem Fall ist eine Dosierung als Stückgut oder Schmelze bei erhöhter Temperatur möglich.

Es ist aber auch möglich die Neutralisation nach der Polymerisation auf der Stufe des Polymergels durchzuführen. Weiterhin ist es möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Hydrogels eingestellt wird. Wird das Polymergel zumindest teilweise nach der Polymerisation neutralisiert, so wird das Polymergel vorzugsweise mechanisch zerkleinert, beispielsweise mittels eines Fleischwolfes, wobei das Neutralisationsmittel aufgesprüht, übergestreut oder aufgegossen und dann sorgfältig untergemischt werden kann. Dazu kann die erhaltene Gelmasse noch mehrmals zur Homogenisierung gewolft werden.

Das Polymergel wird mit einem Umluftbandtrockner getrocknet. Um besonders weiße Produkte zu erhalten, ist es vorteilhaft bei der Trocknung dieses Gels einen schnellen Abtransport des verdampfenden Wassers sicherzustellen. Dazu ist die Trocknertemperatur zu optimieren, die Luftzu- und -abführung muss kontrolliert erfolgen, und es ist in jedem Fall auf ausreichende Belüftung zu achten. Die Trocknung ist naturgemäß um so einfacher und das Produkt um so weißer, wenn der Feststoffgehalt des Gels möglichst hoch ist. Bevorzugt liegt der Feststoffgehalt des Gels vor der Trocknung daher zwischen 30 und 80 Gew.-%. Besonders vorteilhaft ist die Belüftung des Trockners mit Stickstoff oder einem anderen nicht-oxidierenden Inertgas. Wahlweise kann aber auch einfach nur der Partialdruck des Sauerstoffs während der Trocknung abgesenkt werden, um oxidative Vergilbungsvorgänge zu verhindern.

Das getrocknete Polymergel wird hiernach gemahlen und klassiert, wobei zur Mahlung üblicherweise ein- oder mehrstufige Walzenstühle, bevorzugt zwei- oder dreistufige Walzenstühle, Stiftmühlen, Hammermühlen oder Schwingmühlen eingesetzt werden können.

Die mittlere Partikelgröße der als Produktfraktion abgetrennten Polymerpartikel beträgt vorzugsweise mindestens 200 µm, besonders bevorzugt von 250 bis 600 µm, ganz besonders von 300 bis 500 µm. Die mittlere Partikelgröße der Produktfraktion kann mittels der von der EDANA (European Disposables and Nonwovens Association) empfohlenen Testmethode Nr. 420.2-02 "Partikel size distribution" ermittelt werden, wobei die Massenanteile der Siebfraktionen kumuliert aufgetragen werden und die mittlere Partikelgröße graphisch bestimmt wird. Die mittlere Partikelgröße ist hierbei der Wert der Maschenweite, der sich für kumulierte 50 Gew.-% ergibt.

Die Polymerpartikel werden zur weiteren Verbesserung der Eigenschaften nachvernetzt. Geeignete Nachvernetzer sind Verbindungen, die Gruppen enthalten, die mit den mindestens zwei Carboxylatgruppen des Hydrogels kovalente Bindungen bilden können. Geeignete Verbindungen sind beispielsweise Alkoxysiliylverbindungen, Polyaziridine, Polyamine, Polyamidoamine, Di- oder Polyepoxide, wie in EP 83 022 A2, EP 543 303 A1 und EP 937 736 A2 beschrieben, di- oder polyfunktionelle Alkohole, wie in DE 33 14 019 A1, DE 35 23 617 A1 und EP 450 922 A2 beschrieben, oder β-Hydroxyalkylamide, wie in DE 102 04 938 A1 und US 6,239,230 beschrieben.

Des weiteren sind in DE 40 20 780 C1 zyklische Karbonate, in DE 198 07 502 A1 2-Oxazolidon und dessen Derivate, wie 2-Hydroxyethyl-2-oxazolidon, in DE 198 07 992 C1 Bis- und Poly-2-oxazolidinone, in DE 198 54 573 A1 2-Oxotetrahydro-1,3-oxazin und dessen Derivate, in DE 198 54 574 A1 N-Acyl-2-Oxazolidone, in DE 102 04 937 A1 zyklische Harnstoffe, in DE 103 34 584 A1 bizyklische Amidacetale, in EP 1 199 327 A2 Oxetan und zyklische Harnstoffe und in WO 2003/31482 A1 Morpholin-2,3-dion und dessen Derivate als geeignete Nachvernetzer beschrieben.

Weiterhin können auch Nachvernetzer eingesetzt werden, die zusätzliche polymerisierbare ethylenisch ungesättigte Gruppen enthalten, wie in DE 37 13 601 A1 beschrieben.

Die Menge an Nachvernetzer beträgt vorzugsweise 0,01 bis 1 Gew.-%, besonders bevorzugt 0,05 bis 0,5 Gew.-%, ganz besonders bevorzugt 0,1 bis 0,2 Gew.-%, jeweils bezogen auf das Polymer.

In einer bevorzugten Ausführungsform der vorliegenden Erfindung werden zusätzlich zu den Nachvernetzern polyvalente Kationen auf die Partikeloberfläche aufgebracht.

Die im erfindungsgemäßen Verfahren einsetzbaren polyvalenten Kationen sind beispielsweise zweiwertige Kationen, wie die Kationen von Zink, Magnesium, Kalzium und Strontium, dreiwertige Kationen, wie die Kationen von Aluminium, Eisen, Chrom, Seltenerden und Mangan, vierwertige Kationen, wie die Kationen von Titan und Zirkonium. Als Gegenion sind Chlorid, Bromid, Sulfat, Hydrogensulfat, Carbonat, Hydrogencarbonat, Nitrat, Phosphat, Hydrogenphosphat, Dihydrogenphosphat und Carboxylat, wie Acetat und Lactat, möglich. Aluminiumsulfat ist bevorzugt. Außer Metallsalzen können auch Polyamine als polyvalente Kationen eingesetzt werden.

Die Einsatzmenge an polyvalentem Kation beträgt beispielsweise 0,001 bis 0,5 Gew.-%, vorzugsweise 0,005 bis 0,2 Gew.-%, besonders bevorzugt 0,02 bis 0,1 Gew.-%. jeweils bezogen auf das Polymer.

Die Nachvernetzung wird üblicherweise so durchgeführt, dass eine Lösung des Nachvernetzers auf das Hydrogel oder die trockenen Polymerpartikel aufgesprüht wird. Im Anschluss an das Aufsprühen wird thermisch getrocknet, wobei die Nachvernetzungsreaktion sowohl vor als auch während der Trocknung stattfinden kann.

Das Aufsprühen einer Lösung des Vernetzers wird vorzugsweise in Mischern mit bewegten Mischwerkzeugen, wie Schneckenmischer, Paddelmischer, Scheibenmischer, Pflugscharmischer und Schaufelmischer, durchgeführt werden. Besonders bevorzugt sind Vertikalmischer, ganz besonders bevorzugt sind Pflugscharmischer und Schaufelmischer. Geeignete Mischer sind beispielsweise Lödige-Mischer, Bepex-Mischer, Nauta-Mischer, Processall-Mischer und Schugi-Mischer.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Bepex-Trockner und Nara-Trockner. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen im Bereich 100 bis 250 °C, bevorzugt 120 bis 220 °C, und besonders bevorzugt 130 bis 210 °C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten.

Anschließend kann das nachvernetzte Polymer erneut klassiert werden.

Der mittlere Durchmesser der wasserabsorbierenden Polymerpartikel beträgt vorzugsweise mindestens 200 µm, besonders bevorzugt von 250 bis 600 µm, ganz besonders von 300 bis 500 µm. 90% der Polymerpartikel weisen einen Durchmesser von vorzugsweise 100 bis 800 µm, besonders bevorzugt von 150 bis 700 µm, ganz besonders bevorzugt von 200 bis 600 µm, auf.

### Methoden:

Die Messungen sollten, wenn nicht anders angegeben, bei einer Umgebungstemperatur von 23 ± 2 °C und einer relativen Luftfeuchte von 50 ± 10 % durchgeführt werden. Die wasserabsorbierenden Polymere werden vor der Messung gut durchmischt.

### Wassergehalt

Der Wassergehalt der wasserabsorbierenden Polymerpartikel wird gemäß der von der EDANA (European Disposables and Nonwovens Association) empfohlenen Testmethode Nr. 430.2-02 "Moisture content" bestimmt.

### Zentrifugenretentionskapazität (CRC Centrifuge Retention Capacity)

Die Zentrifugenretentionskapazität der wasserabsorbierenden Polymerpartikel wird gemäß der von der EDANA (European Disposables and Nonwovens Association) empfohlenen Testmethode Nr. 441.2-02 "Centrifuge retention capacity" bestimmt.

### Absorption unter Druck (AUL0.7psi Absorbency Under Load)

Die Absorption unter Druck der wasserabsorbierenden Polymerpartikel wird gemäß der von der EDANA (European Disposables and Nonwovens Association) empfohlenen Testmethode Nr. 442.2-02 "Absorption under pressure" bestimmt, wobei ein Gewicht mit 0,7 psi (49 g/cm²) statt eines Gewichts mit 0,3 psi (21 g/cm²) verwendet wird.

### Extrahierbare

Der Gehalt an Extrahierbaren (extrahierbare Anteile) der wasserabsorbierenden Polymerpartikel wird gemäß der von der EDANA (European Disposables and Nonwovens Association) empfohlenen Testmethode Nr. 470.2-02 "Extractable" bestimmt.

Die EDANA-Testmethoden sind beispielsweise erhältlich bei der European Disposables and Nonwovens Association, Avenue Eugène Plasky 157, B-1030 Brüssel, Belgien.

### Beispiele 1 bis 3

Durch kontinuierliches Mischen von Wasser, 50 gew.-%iger Natronlauge und Acrylsäure wurde eine 38,8 gew.-%ige Acrylsäure/Natriumacrylatlösung hergestellt, so dass der Neutralisationsgrad 71,3 mol-% betrug. Die Monomerlösung wurde nach dem Mischen der Komponenten durch einen Wärmetauscher kontinuierlich abgekühlt.

Als mehrfach ethylenisch ungesättigter Vernetzer wird Polyethylenglykol-400-diacrylat (Diacrylat eines Polyethylenglykols mit einem mittleren Molgewicht von 400 g/mol) verwendet. Die Einsatzmenge betrug 2 kg pro t Monomerlösung.

Zur Initiierung der radikalischen Polymerisation wurden folgende Komponenten eingesetzt: Wasserstoffperoxid (1,03 kg (0,25 gew.-%ig) pro t Monomerlösung), Natriumperoxodisulfat (3,10 kg (15 gew.-%ig) pro t Monomerlösung), sowie Ascorbinsäure (1,05 kg (1 gew.-%ig) pro t Monomerlösung).

Der Durchsatz der Monomerlösung betrug 20 t/h.

Die einzelnen Komponenten werden kontinuierlich in einen List Contikneter mit 6.3m³ Volumen (Fa. List, Arisdorf, Schweiz) in folgenden Mengen eindosiert:

| | |
|---|---|
| 20 t/h | Monomerlösung |
| 40 kg/h | Polyethylenglycol-400-diacrylat |
| 82,6 kg/h | Wasserstoffperoxidlösung/Natriumperoxodisulfat-Lösung |
| 21 kg/h | Ascorbinsäurelösung |

Zwischen den Zugabepunkten für Vernetzer und Initiatoren wurde die Monomerlösung mit Stickstoff inertisiert.

Am Ende des Reaktors wurden zusätzlich 1.000 kg/h abgetrenntes Unterkorn mit einer Partikelgröße kleiner 150 µm zudosiert.

Die Reaktionslösung hatte am Zulauf eine Temperatur von 23,5 °C. Der Reaktor wurde mit einer Drehzahl der Wellen von 38rpm betrieben. Die Verweilzeit der Reaktionsmischung im Reaktor betrug 15 Minuten.

Nach Polymerisation und Gelzerkleinerung wurde das wässrige Polymergel auf einen Umluftbandtrockner aufgegeben. Die Verweilzeit auf dem Trocknerband betrug ca. 37 Minuten.

Das getrocknete Hydrogel wurde gemahlen und gesiebt. Die Fraktion mit der Partikelgröße 150 bis 850 µm wurde nachvernetzt.
Die Nachvernetzerlösung wurde in einem Schugi-Mischer (Fa, Hosokawa-Micron B.V., Doetichem, NL) auf die Polymerpartikel aufgesprüht. Die Nachvernetzerlösung war eine 3,3 gew.-%ige Lösung von 2-Hydroxyethyl-2-oxazolidinon in Propylenglykol/Wasser Gewichtsverhältnis 1:2,3).

Es wurden die folgenden Mengen dosiert:

| | |
|---|---|
| 7,5 t/h | wasserabsorbierende Polymerpartikel (Grundpolymer) |
| 232,5 kg/h | Nachvernetzerlösung |

Anschließend wurde 45 Minuten bei 190 °C in einem NARA-Paddle-Dryer (Fa. GMF Gouda, Waddinxveen, NL) getrocknet und nachvernetzt.

Die nachvernetzten Polymerpartikel wurden in einem NARA-Paddle-Dryer (Fa. GMF Gouda, Waddinxveen, NL) auf 60 °C abgekühlt.

Die abgekühlten Polymerpartikel wurden auf eine Partikelgröße von 150 bis 850 µm abgesiebt.

Die Eigenschaften der wasserabsorbierenden Polymerpartikel wurden vor und nach der Nachvernetzung bestimmt. Die Ergebnisse sind in den Tabellen 1 und 2 zusammengefasst.

**Tab. 1: Eigenschaften vor der Nachvernetzung**

| Beispiel | Wassergehalt | CRC | AUL0.7psi | Extrahierbare |
|---|---|---|---|---|
| 1 | 2,4 Gew.-% | 38,1 g/g | 8,4 g/g | 10,9 Gew.-% |
| 2 | 4,0 Gew.-% | 37,6 g/g | 8,1 g/g | 10,6 Gew.-% |
| 3 | 6,3 Gew.-% | 36,8 g/g | 8,0 g/g | 10,5 Gew.-% |

**Tab. 2: Eigenschaften nach der Nachvernetzung**

| Beispiel | CRC | AUL0.7psi |
|---|---|---|
| 1 | 32,7 g/g | 19,8 g/g |
| 2 | 32,0 g/g | 24,6 g/g |
| 3 | 32,3 g/g | 21,8 g/g |

Die Ergebnisse zeigen, dass der Wassergehalt nach der Trocknung im untersuchten Bereich keinen Einfluß auf die Qualität der wasserabsorbierenden Polymerpartikel vor der Nachvernetzung hat.

Der Wassergehalt nach der Trocknung hat aber einen erheblichen Einfluß auf die Absorption unter Druck nach der Nachvernetzung. Die Versuche belegen ein ausgeprägtes Maximum.

## Patentansprüche

1. Verfahren zur kontinuierlichen Herstellung wasserabsorbierender Polymerpartikel, umfassend,
i) Polymerisation einer Monomerlösung, wobei ein Polymergel erhalten wird,
ii) Trocknung des Polymergels auf einem Umluftbandtrockner, wobei der Umluftbandtrockner mindestens eine Trockenkammer aufweist,
iii) Zerkleinerung des getrockneten Polymergels, wobei Polymerpartikel erhalten werden,
iv) Klassierung der Polymerpartikel und
v) Nachvernetzung der klassierten Polymerpartikel,
**dadurch gekennzeichnet, dass** der Wassergehalt des Polymergels während oder nach der Trocknung des Polymergels ii) und vor der Nachvernetzung v) mindestens einmal in einer Minute bestimmt und als Regelgröße für den Umluftbandtrockner verwendet wird und dass die aus der Regelung abgeleitete Stellgröße bei abweichendem Sollwert mindestens einmal in einer Minute angepasst wird.

2. Verfahren gemäß Anspruch 1, **dadurch gekennzeichnet, dass** die Trocknung des Polymergels ii) so geregelt wird, dass der Wassergehalt des Polymergels an der Messstelle über einen Zeitraum von mindestens einer Stunde um weniger als 1,5 Gew.-% vom Mittelwert abweicht und der Mittelwert für den Wassergehalt an der Messstelle weniger als 10 Gew.-% beträgt.

3. Verfahren gemäß Anspruch 1 oder 2, **dadurch gekennzeichnet, dass** der Wassergehalt des getrockneten Polymergels von 1 bis 10 Gew.-% beträgt.

4. Verfahren gemäß einem der Ansprüche 1 bis 3, **dadurch gekennzeichnet, dass** die Förderbandgeschwindigkeit des Umluftbandtrockners als Stellgröße verwendet wird.

5. Verfahren gemäß Anspruch 4, **dadurch gekennzeichnet, dass** die Förderbandgeschwindigkeit von 0,005 bis 0,05 m/s beträgt.

6. Verfahren gemäß einem der Ansprüche 1 bis 5, **dadurch gekennzeichnet, dass** die Geschwindigkeit der anströmenden Luft als Stellgröße verwendet wird.

7. Verfahren gemäß Anspruch 6, **dadurch gekennzeichnet, dass** die Geschwindigkeit der anströmenden Luft von 0,5 bis 5 m/s beträgt.

8. Verfahren gemäß einem der Ansprüche 1 bis 7, **dadurch gekennzeichnet, dass** die Gaseingangstemperatur des Umluftbandtrockners als Stellgröße verwendet wird.

9. Verfahren gemäß Anspruch 8, **dadurch gekennzeichnet, dass** die Gaseingangstemperatur von 50 bis 250 °C beträgt.

10. Verfahren gemäß einem der Ansprüche 1 bis 9, **dadurch gekennzeichnet, dass** eine Kaskadenregelung verwendet wird.

11. Verfahren gemäß einem der Ansprüche 1 bis 10, **dadurch gekennzeichnet, dass** der Wassergehalt des Polymergels indirekt bestimmt wird.

12. Verfahren gemäß einem der Ansprüche 1 bis 10, **dadurch gekennzeichnet, dass** der Wassergehalt des Polymergels direkt bestimmt wird.

13. Verfahren gemäß einem der Ansprüche 1 bis 12, **dadurch gekennzeichnet, dass** die wasserabsorbierenden Polymerpartikel zu mindestens 50 mol-% zumindest teilweise neutralisierter polymerisierter Acrylsäure enthalten.

14. Verfahren gemäß einem der Ansprüche 1 bis 13, **dadurch gekennzeichnet, dass** die wasserabsorbierenden Polymerpartikel von 0,001 bis 5 Gew.-% eines einpolymerisierten Vernetzers enthalten.

15. Verfahren gemäß einem der Ansprüche 1 bis 14, **dadurch gekennzeichnet, dass** die wasserabsorbierenden Polymerpartikel eine Zentrifugenretentionskapazität von mindestens 15 g/g aufweisen.

## Claims

1. A process for continuously preparing water-absorbing polymer beads, comprising
i) polymerization of a monomer solution to obtain a polymer gel,
ii) drying of the polymer gel on a forced-air belt dryer, the forced-air belt dryer
having at least one drying chamber,
iii) comminution of the dried polymer gel to obtain polymer beads,
iv) classification of the polymer beads and
v) postcrosslinking of the classified polymer beads,
wherein the water content of the polymer gel, during or after the drying of the polymer gel ii) and before the postcrosslinking v), is determined at least once in one minute and used as a control parameter for the forced-air belt dryer, and the control parameter derived from the control procedure is adjusted at least once in one minute in the event of a deviating target value.

2. The process according to claim 1, wherein the drying of the polymer gel ii) is controlled in such a way that the water content of the polymer gel at the measurement point deviates by less than 1.5% by weight from the mean value over a period of at least one hour and the mean value for the water content at the measurement point is less than 10% by weight.

3. The process according to claim 1 or 2, wherein the water content of the dried polymer gel is from 1 to 10% by weight.

4. The process according to any of claims 1 to 3, wherein the conveyor belt speed of the forced-air belt dryer is used as a control parameter.

5. The process according to claim 4, wherein the conveyor belt speed is from 0.005 to 0.05 m/s.

6. The process according to any of claims 1 to 5, wherein the speed of the air flowing in is used as a control parameter.

7. The process according to claim 6, wherein the speed of the air flowing in is from 0.5 to 5 m/s.

8. The process according to any of claims 1 to 7, wherein the gas inlet temperature of the forced-air belt dryer is used as a control parameter.

9. The process according to claim 8, wherein the gas inlet temperature is from 50 to 250°C.

10. The process according to any of claims 1 to 9, wherein closed-loop control is used.

11. The process according to any of claims 1 to 10, wherein the water content of the polymer gel is determined indirectly.

12. The process according to any of claims 1 to 10, wherein the water content of the polymer gel is determined directly.

13. The process according to any of claims 1 to 12, wherein the water-absorbing polymer beads comprise at least partly neutralized polymerized acrylic acid to an extent of at least 50 mol%.

14. The process according to any of claims 1 to 13, wherein the water-absorbing polymer beads comprise from 0.001 to 5% by weight of a copolymerized crosslinker.

15. The process according to any of claims 1 to 14, wherein the water-absorbing polymer beads have a centrifuge retention capacity of at least 15 g/g.

## Revendications

1. Procédé de fabrication continue de particules polymères absorbant l'eau, comprenant :
i) la polymérisation d'une solution de monomères, un gel polymère étant obtenu,
ii) le séchage du gel polymère sur un séchoir à bande à circulation d'air, le séchoir à bande à circulation d'air comprenant au moins une chambre de séchage,
iii) le broyage du gel polymère sec, des particules polymères étant obtenues,
iv) la classification des particules polymères et
v) la post-réticulation des particules polymères classées,
**caractérisé en ce que** la teneur en eau du gel polymère est déterminée au moins une fois en une minute pendant ou après le séchage du gel polymère ii) et avant la post-réticulation v) et utilisée en tant que grandeur commandée pour le séchoir à bande à circulation d'air, et **en ce que** la grandeur de commande dérivée du réglage est ajustée au moins une fois en une minute en cas de déviation de la consigne.

2. Procédé selon la revendication 1, **caractérisé en ce que** le séchage du gel polymère ii) est réglé de manière à ce que la teneur en eau du gel polymère à l'emplacement de mesure dévie de moins de 1,5 % en poids de la valeur moyenne pendant une période d'au moins une heure, et la valeur moyenne pour la teneur en eau à l'emplacement de mesure est inférieure à 10 % en poids.

3. Procédé selon la revendication 1 ou 2, **caractérisé en ce que** la teneur en eau du gel polymère séché est de 1 à 10 % en poids.

4. Procédé selon l'une quelconque des revendications 1 à 3, **caractérisé en ce que** la vitesse de la bande transporteuse du séchoir à bande à circulation d'air est utilisée en tant que grandeur de commande.

5. Procédé selon la revendication 4, **caractérisé en ce que** la vitesse de la bande transporteuse est de 0,005 à 0,05 m/s.

6. Procédé selon l'une quelconque des revendications 1 à 5, **caractérisé en ce que** la vitesse de l'air en écoulement est utilisée en tant que grandeur de commande.

7. Procédé selon la revendication 6, **caractérisé en ce que** la vitesse de l'air en écoulement est de 0,5 à 5 m/s.

8. Procédé selon l'une quelconque des revendications 1 à 7, **caractérisé en ce que** la température d'entrée du gaz du séchoir à bande à circulation d'air est utilisée en tant que grandeur de commande.

9. Procédé selon la revendication 8, **caractérisé en ce que** la température d'entrée du gaz est de 50 à 250 °C.

10. Procédé selon l'une quelconque des revendications 1 à 9, **caractérisé en ce qu'**un réglage en cascade est utilisé.

11. Procédé selon l'une quelconque des revendications 1 à 10, **caractérisé en ce que** la teneur en eau du gel polymère est déterminée indirectement.

12. Procédé selon l'une quelconque des revendications 1 à 10, **caractérisé en ce que** la teneur en eau du gel polymère est déterminée directement.

13. Procédé selon l'une quelconque des revendications 1 à 12, **caractérisé en ce que** les particules polymères absorbant l'eau contiennent au moins 50 % en moles d'acide acrylique polymérisé au moins partiellement neutralisé.

14. Procédé selon l'une quelconque des revendications 1 à 13, **caractérisé en ce que** les particules polymères absorbant l'eau contiennent 0,001 à 5 % en poids d'un agent de réticulation polymérisé.

15. Procédé selon l'une quelconque des revendications 1 à 14, **caractérisé en ce que** les particules polymères absorbant, l'eau présentent une capacité de rétention centrifuge d'au moins 15 g/g.
